(19) Europäisches Patentamt
European Patent Office
Office européen des brevets

(11) EP 4 549 493 A1

(12) # EUROPEAN PATENT APPLICATION
published in accordance with Art. 153(4) EPC

(43) Date of publication:
**07.05.2025 Bulletin 2025/19**

(21) Application number: **23830822.5**

(22) Date of filing: **27.04.2023**

(51) International Patent Classification (IPC):
***C08J 3/24*** *(2006.01)* ***C08J 11/08*** *(2006.01)*
***C09J 133/00*** *(2006.01)* ***C09J 7/38*** *(2018.01)*

(52) Cooperative Patent Classification (CPC):
**C08J 3/24; C08J 11/08; C09J 7/38; C09J 133/00;**
Y02W 30/62

(86) International application number:
**PCT/JP2023/016765**

(87) International publication number:
**WO 2024/004369 (04.01.2024 Gazette 2024/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.06.2022 JP 2022105920**

(71) Applicants:
- **NITTO DENKO CORPORATION**
**Ibaraki-shi**
**Osaka 567-8680 (JP)**
- **Nitto Denko Base Material Corporation**
**Toyohashi-shi, Aichi 441-3194 (JP)**

(72) Inventors:
- **YAMADA Yosuke**
**Ibaraki-shi, Osaka 567-8680 (JP)**
- **KAWATAKE Fumika**
**Ibaraki-shi, Osaka 567-8680 (JP)**
- **YAMAMURA Kazuki**
**Toyohashi-shi, Aichi 441-3194 (JP)**
- **YAMAMOTO Akiyoshi**
**Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

(54) **RECYCLED ACRYLIC ADHESIVE AGENT PRODUCTION METHOD AND RECYCLED ACRYLIC ADHESIVE TAPE**

(57) A method for producing a recycled acrylic pressure-sensitive adhesive by regenerating a base polymer from an acrylic pressure-sensitive adhesive is provided. A recycled acrylic pressure-sensitive adhesive tape including a recycled acrylic pressure-sensitive adhesive obtained by the production method is provided.

A recycled acrylic pressure-sensitive adhesive production method according to an embodiment of the present invention includes the steps of: (I) reacting an acrylic pressure-sensitive adhesive, a liquid having a Hansen solubility parameter of 31 or less, and an alkaline compound to produce a hydrophilic polymer; and (II) reacting the hydrophilic polymer and an alcohol (A2) to produce a recycled acrylic polymer.

EP 4 549 493 A1

## Description

### TECHNICAL FIELD

The present invention relates to a recycled acrylic pressure-sensitive adhesive producing method and a recycled acrylic pressure-sensitive adhesive tape.

### BACKGROUND ART

A large quantity of pressure-sensitive adhesive tapes are used for putting labels or the like on articles and wrapping materials, for packing with packing materials, in manufacturing process of electrical parts or optical parts, for masking, etc. An amount of pressure-sensitive adhesive tapes used in manufacturing process of electrical parts or optical parts has been increasing particularly in recent years, a large amount of waste of pressure-sensitive adhesive tapes are produced at, for example, manufacturing sites.

Waste of pressure-sensitive adhesive tapes is commonly burned and disposed or brought to waste disposal facilities and disposed. However, such disposal is not preferred from the viewpoint of environmental load reduction and resource circulation.

In view of the above circumstances, it is necessary to reduce such disposal of waste of pressure-sensitive adhesive tapes as much as possible and reuse resources. Recycling of pressure-sensitive adhesive tape materials is one possible means of reducing disposal of pressure-sensitive adhesive tapes. Establishment of a technology of recycling pressure-sensitive adhesive tape materials is conducive to, for example, reduction of $CO_2$ emissions from fossil resource extraction, and can also be very effective in terms of solving the climate change problem.

Pressure-sensitive adhesive materials are typically pressure-sensitive adhesives and substrates. A pressure-sensitive adhesive tape is obtained by producing a pressure-sensitive adhesive on a substrate typically by dissolving a base polymer and an additive, such as a crosslinking agent, suitable for the purpose in a solvent to give a pressure-sensitive adhesive composition, applying the pressure-sensitive adhesive composition to the substrate, performing heating, drying, or the like as necessary, and allowing a crosslinking reaction to progress (e.g., Patent Literature 1).

As described above, pressure-sensitive adhesives which are typical pressure-sensitive adhesive tape materials are difficult to dissolve in solvents because of their cross-linked structures formed by crosslinking reaction, and that makes it impossible to directly use the pressure-sensitive adhesives for recycled pressure-sensitive adhesive compositions to be applied to substrates. Hence, to recycle such pressure-sensitive adhesives, the pressure-sensitive adhesives need to be regenerated as base polymers by cleaving the cross-linked structures in the pressure-sensitive adhesives.

### CITATION LIST

#### Patent Literature

Patent Literature 1: JP 2021-175796 A

### SUMMARY OF INVENTION

#### Technical Problem

Objects of the present invention are to provide a method for producing a recycled acrylic pressure-sensitive adhesive by regenerating a base polymer from an acrylic pressure-sensitive adhesive and to provide a recycled acrylic pressure-sensitive adhesive tape including a recycled acrylic pressure-sensitive adhesive obtained by the production method.

#### Solution to Problem

[1] A recycled acrylic pressure-sensitive adhesive production method including the steps of: (I) reacting an acrylic pressure-sensitive adhesive, a liquid having a Hansen solubility parameter of 31 or less, and an alkaline compound to produce a hydrophilic polymer; and (II) reacting the hydrophilic polymer and an alcohol (A2) to produce a recycled acrylic polymer.

[2] In the recycled acrylic pressure-sensitive adhesive production method according to [1], the liquid having a Hansen solubility parameter of 31 or less may include at least one selected from the group consisting of an alcohol (A1), a

hydrocarbon, a ketone, an ester, an ether, an amine, a nitrile, a carboxylic acid, and a terpene.

[3] In the recycled acrylic pressure-sensitive adhesive production method according to [2], the liquid having a Hansen solubility parameter of 31 or less may essentially include the alcohol (A1).

[4] In the recycled acrylic pressure-sensitive adhesive production method according to [2] or [3], the alcohol (A1) may include an alcohol having 1 to 8 carbon atoms.

[5] In the recycled acrylic pressure-sensitive adhesive production method according to any one of [2] to [4], the acrylic pressure-sensitive adhesive may have a - COO-$R^1$ group, a structure of the alcohol (A1) may be $R^{21}$-OH, and the $R^1$ and the $R^{21}$ may be the same.

[6] In the recycled acrylic pressure-sensitive adhesive production method according to any one of [2] to [4], the acrylic pressure-sensitive adhesive may have a - COO-$R^1$ group, a structure of the alcohol (A1) may be $R^{21}$-OH, and the $R^1$ and the $R^{21}$ may be different.

[7] In the recycled acrylic pressure-sensitive adhesive production method according any one of [1] to [6], the acrylic pressure-sensitive adhesive may have a -COO-$R^1$ group, a structure of the alcohol (A2) may be $R^{22}$-OH, and the $R^1$ and the $R^{22}$ may be the same.

[8] In the recycled acrylic pressure-sensitive adhesive production method according any one of [1] to [6], the acrylic pressure-sensitive adhesive may have a -COO-$R^1$ group, a structure of the alcohol (A2) may be $R^{22}$-OH, and the $R^1$ and the $R^{22}$ may be different.

[9] The recycled acrylic pressure-sensitive adhesive production method according to any one of [1] to [8] may include the step of (III) separating the acrylic pressure-sensitive adhesive from an pressure-sensitive adhesive tape including the acrylic pressure-sensitive adhesive.

[10] The recycled acrylic pressure-sensitive adhesive production method according to any one of [1] to [9] may include the step of (IV) reacting the recycled acrylic polymer and a crosslinking agent.

[11] A recycled acrylic pressure-sensitive adhesive tape includes: a recycled acrylic pressure-sensitive adhesive obtained by the production method according to any one of [1] to [10]; and a substrate.

## Advantageous Effects of Invention

The present invention can provide a method for producing a recycled acrylic pressure-sensitive adhesive by regenerating a base polymer from an acrylic pressure-sensitive adhesive and a recycled acrylic pressure-sensitive adhesive tape including a recycled acrylic pressure-sensitive adhesive obtained by the production method.

## DESCRIPTION OF EMBODIMENTS

The term "weight" herein may be interpreted as "mass" which is commonly used as an SI unit for weight.

Herein, the term "(meth)acrylic" means "acrylic and/or methacrylic", the term "(meth)acrylate" means "acrylate and/or methacrylate", the term "(meth)allyl" means "allyl and/or methallyl", and the term "(meth)acrolein" means "acrolein and/or methacrolein".

### <<<<1. Recycled acrylic pressure-sensitive adhesive producing method>>>>

A recycled acrylic pressure-sensitive adhesive producing method according to an embodiment of the present invention includes the steps of: (I) reacting an acrylic pressure-sensitive adhesive, a liquid having a Hansen solubility parameter of 31 or less, and an alkaline compound to produce a hydrophilic polymer; and (II) reacting the hydrophilic polymer and an alcohol (A2) to produce a recycled acrylic polymer.

The recycled acrylic pressure-sensitive adhesive producing method according to the embodiment of the present invention may include the step of (III) separating the above acrylic pressure-sensitive adhesive from a pressure-sensitive adhesive tape including the acrylic pressure-sensitive adhesive. Typically, step (III) can be included before step (I).

The recycled acrylic polymer obtained in step (II) may be directly used as a recycled acrylic pressure-sensitive adhesive, or may be reacted with a crosslinking agent to give a recycled acrylic pressure-sensitive adhesive having a cross-linked structure. That is, the recycled acrylic pressure-sensitive adhesive producing method according to the embodiment of the present invention may include the step of (IV) reacting the recycled acrylic polymer obtained in step (II) and a crosslinking agent. Preferably, step (IV) can be included after step (II).

The recycled acrylic pressure-sensitive adhesive producing method according to the embodiment of the present invention may include an appropriate additional step unless the effect of the present invention is impaired. The additional step may be composed of one step only, or may be composed of two or more steps.

<<1-1. Step (I)>>

Step (I) is a step of reacting the acrylic pressure-sensitive adhesive, the liquid having a Hansen solubility parameter of 31 or less, and the alkaline compound to produce the hydrophilic polymer.

In step (I), an appropriate method can be adopted as the method for reacting the acrylic pressure-sensitive adhesive, the liquid having a Hansen solubility parameter of 31 or less, and the alkaline compound unless the effect of the present invention is impaired. The method is preferably a method for impregnating the acrylic pressure-sensitive adhesive with a pressure-sensitive adhesive treatment solution containing the liquid having a Hansen solubility parameter of 31 or less and the alkaline compound in that the effect of the present invention can be further exhibited. An appropriate impregnation method can be adopted as such an impregnation method according to the scale, the type of acrylic pressure-sensitive adhesive, and the like unless the effect of the present invention is impaired. Herein, the phrase "impregnating the acrylic pressure-sensitive adhesive with the pressure-sensitive adhesive treatment solution" means creating a state where the acrylic pressure-sensitive adhesive is allowed to be impregnated with the pressure-sensitive adhesive treatment solution, and is, for example, creating a state where at least a portion of the acrylic pressure-sensitive adhesive is immersed in the pressure-sensitive adhesive treatment solution. A state where at least a portion of the acrylic pressure-sensitive adhesive is immersed in the pressure-sensitive adhesive treatment solution allows the pressure-sensitive adhesive treatment solution to penetrate the acrylic pressure-sensitive adhesive.

In one preferred embodiment of step (I), stirring is performed in a state where the acrylic pressure-sensitive adhesive is impregnated with the pressure-sensitive adhesive treatment solution. Stirring in a state where the acrylic pressure-sensitive adhesive is impregnated with the pressure-sensitive adhesive treatment solution makes it smoother to produce the hydrophilic polymer from the acrylic pressure-sensitive adhesive. Herein, the phrase "state where the acrylic pressure-sensitive adhesive is impregnated with the pressure-sensitive adhesive treatment solution" means a state where the acrylic pressure-sensitive adhesive is allowed to be impregnated with the pressure-sensitive adhesive treatment solution, and is, for example, a state where at least a portion of the acrylic pressure-sensitive adhesive is immersed in the pressure-sensitive adhesive treatment solution. A state where at least a portion of the acrylic pressure-sensitive adhesive is immersed in the pressure-sensitive adhesive treatment solution allows the pressure-sensitive adhesive treatment solution to penetrate the acrylic pressure-sensitive adhesive.

Regarding a usage ratio between the acrylic pressure-sensitive adhesive and the pressure-sensitive adhesive treatment solution, an appropriate usage ratio can be adopted according to the type of acrylic pressure-sensitive adhesive used, the type of pressure-sensitive adhesive treatment solution used, and the like unless the effect of the present invention is impaired. The usage ratio is, for example, preferably 1:0.5 to 1:50, more preferably 1:1 to 1:30, even more preferably 1:3 to 1:20, and particularly preferably 1:5 to 1:10 on a weight basis.

Regarding the stirring method, an appropriate stirring method can be adopted according to the scale, the type of acrylic pressure-sensitive adhesive, and the like unless the effect of the present invention is impaired. Regarding the stirring time as well, an appropriate stirring time can be adopted according to the scale, the type of acrylic pressure-sensitive adhesive, and the like unless the effect of the present invention is impaired.

In one preferred embodiment of step (I), a supersonic treatment is performed in a state where the acrylic pressure-sensitive adhesive is impregnated with the pressure-sensitive adhesive treatment solution. Performing a supersonic treatment in a state where the acrylic pressure-sensitive adhesive is impregnated with the pressure-sensitive adhesive treatment solution makes it much smoother to produce the hydrophilic polymer from the acrylic pressure-sensitive adhesive.

Regarding a supersonic treatment method, an appropriate supersonic treatment method can be adopted according to the scale, the type of acrylic pressure-sensitive adhesive, and the like unless the effect of the present invention is impaired.

In a state where the acrylic pressure-sensitive adhesive is impregnated with the pressure-sensitive adhesive treatment solution, the temperature is preferably 10°C or higher, more preferably 15°C or higher, even more preferably 20°C or higher, even more preferably 25°C or higher, even more preferably 30°C or higher, and particularly preferably 35°C or higher in that the effect of the present invention can be further exhibited. The upper limit thereof is preferably 120°C or lower, more preferably 100°C or lower, and even more preferably 80°C or lower. When the temperature is in the above range in a state where the acrylic pressure-sensitive adhesive is impregnated with the pressure-sensitive adhesive treatment solution, it is possible to easily produce the hydrophilic polymer from the acrylic pressure-sensitive adhesive under mild conditions.

It is inferred that by step (I), the acrylic pressure-sensitive adhesive swells with the pressure-sensitive adhesive treatment solution and then the liquid having a Hansen solubility parameter of 31 or less and the alkaline compound contained in the pressure-sensitive adhesive treatment solution facilitate progression of, for example, hydrolysis (including saponification in which a reaction between an ester and a base produces a salt and an alcohol). The hydrophilic polymer derived from the acrylic pressure-sensitive adhesive is thereby formed. Here, the "hydrophilic polymer derived from the acrylic pressure-sensitive adhesive" means a hydrophilic polymer having a structure derived from a base polymer

used to form the acrylic pressure-sensitive adhesive, and specifically means, for example, a hydrophilic polymer having a structure where at least a portion of a functional group (such as a carboxyl group or an ester group) at a terminal of a side chain of the base polymer for forming the acrylic pressure-sensitive adhesive has been subjected to hydrolysis (including saponification in which a reaction between an ester and a base produces a salt and an alcohol) with the liquid having a Hansen solubility parameter of 31 or less and the alkaline compound contained in the pressure-sensitive adhesive treatment solution.

The hydrophilic polymer formed may be further treated with a solvent, as necessary, to give a solution or a dispersion. For example, the hydrophilic polymer may be dissolved in an aqueous solvent to give a solution. Examples of the aqueous solvent include water, an alcohol, a solvent mixture thereof, and a solvent mixture of water and/or an alcohol and an organic solvent.

A weight-average molecular weight of the hydrophilic polymer obtained in step (I) is preferably 100,000 to 3,000,000, more preferably 150,000 to 2,000,000, even more preferably 200,000 to 1,500,000, and particularly preferably 250,000 to 1,000,000.

A Tg (glass transition temperature) of the hydrophilic polymer obtained in step (I) is preferably 50°C to 150°C, more preferably 70°C to 140°C, even more preferably 80°C to 130°C, and particularly preferably 90°C to 120°C.

By step (I), the hydrophilic polymer is easily obtained from the acrylic pressure-sensitive adhesive under mild conditions. This is presumably because, by step (I), hydrolysis (including saponification in which a reaction between an ester and a base produces a salt and an alcohol) of the acrylic pressure-sensitive adhesive easily progresses under mild conditions to give the hydrophilic polymer.

Hydrolysis (including saponification in which a reaction between an ester and a base produces a salt and an alcohol) of an acrylic pressure-sensitive adhesive conventionally requires performing the above reaction of the acrylic pressure-sensitive adhesive under high-temperature and high-pressure conditions or designing the acrylic pressure-sensitive adhesive to have any of a limited range of compositions. By step (I), hydrolysis (including saponification in which a reaction between an ester and a base produces a salt and an alcohol) of the acrylic pressure-sensitive adhesive can be performed favorably and easily under mild conditions without setting high-temperature and high-pressure conditions and designing the acrylic pressure-sensitive adhesive to have any of a limited range of compositions.

<1-1-a. Acrylic pressure-sensitive adhesive>

An appropriate acrylic pressure-sensitive adhesive can be adopted as the acrylic pressure-sensitive adhesive unless the effect of the present invention is impaired. The acrylic pressure-sensitive adhesive is typically an acrylic pressure-sensitive adhesive as waste (sometimes referred to as "wasted acrylic pressure-sensitive adhesive"). Examples of the wasted acrylic pressure-sensitive adhesive include an acrylic pressure-sensitive adhesive included in an acrylic pressure-sensitive adhesive tape collected after used, an acrylic pressure-sensitive adhesive residue left on an adherend after peeling the acrylic pressure-sensitive adhesive tape from the adherend, and an acrylic pressure-sensitive adhesive adhered to acrylic pressure-sensitive adhesive production equipment.

The acrylic pressure-sensitive adhesive varies in size and shape because the acrylic pressure-sensitive adhesive can be in the form of, for example, a pressure-sensitive adhesive layer included in an acrylic pressure-sensitive adhesive tape, a pressure-sensitive adhesive residue left on an adherend, or a pressure-sensitive adhesive adhered to production equipment such as a polymerization reactor, a blending device, or an application machine.

The acrylic pressure-sensitive adhesive can be produced by an appropriate method. The method is, for example, a method for producing the acrylic pressure-sensitive adhesive from an acrylic pressure-sensitive adhesive composition, and is more specifically a method for producing the pressure-sensitive adhesive (specifically, a pressure-sensitive adhesive layer) on an appropriate substrate by applying an acrylic pressure-sensitive adhesive composition to the substrate, heating or drying the acrylic pressure-sensitive adhesive composition as necessary, and curing the acrylic pressure-sensitive adhesive composition as necessary. Examples of the application method include methods involving a gravure roll coater, a reverse roll coater, a kiss roll coater, a dip roll coater, a bar coater, a knife coater, an air knife coater, a spray coater, a comma coater, a direct coater, a roll brush coater, and a die coater.

The acrylic pressure-sensitive adhesive composition preferably includes an acrylic polymer and a crosslinking agent in that the effect of the present invention can be further exhibited.

The acrylic polymer is what can be called "base polymer" in the field of acrylic pressure-sensitive adhesives. The acrylic polymer may be composed of only one acrylic polymer, or may be composed of two or more acrylic polymers.

A proportion of the acrylic polymer in the acrylic pressure-sensitive adhesive composition is preferably 50 weight% to 100 weight%, more preferably 60 weight% to 100 weight%, even more preferably 70 weight% to 100 weight%, particularly preferably 80 weight% to 100 weight%, and most preferably 90 weight% to 100 weight% in terms of solid content.

An appropriate acrylic polymer can be adopted as the acrylic polymer unless the effect of the present invention is impaired.

A weight-average molecular weight of the acrylic polymer is preferably 100,000 to 3,000,000, more preferably 150,000 to 2,000,000, even more preferably 200,000 to 1,500,000, and particularly preferably 250,000 to 1,000,000.

A Tg (glass transition temperature) of the acrylic polymer is preferably -100°C to 30°C, more preferably -95°C to 20°C, even more preferably -90°C to 10°C, and particularly preferably -80°C to 0°C.

The acrylic polymer is preferably an acrylic polymer formed through polymerization from Composition (A) including: (Component a) which is a (meth)acrylic acid alkyl ester whose alkyl ester moiety has an alkyl group having 4 to 12 carbon atoms; and (Component b) which is at least one selected from the group consisting of a (meth)acrylic acid ester having an OH group and (meth)acrylic acid in that the effect of the present invention can be further exhibited. (Component a) and (Component b) may be respectively composed of only one (Component a) and only one (Component b), or may be respectively composed of two or more (Components a) and two or more (Components b).

Examples of the (meth)acrylic acid alkyl ester whose alkyl ester moiety has an alkyl group having 4 to 12 carbon atoms, namely (Component a), include n-butyl (meth)acrylate, isobutyl (meth)acrylate, s-butyl (meth)acrylate, t-butyl (meth)acrylate, pentyl (meth)acrylate, hexyl (meth)acrylate, heptyl (meth)acrylate, octyl (meth)acrylate, 2-ethylhexyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, and dodecyl (meth)acrylate. Among these, examples of the (meth)acrylic acid alkyl ester whose alkyl ester moiety has an alkyl group having 4 to 12 carbon atoms, namely (Component a), preferably include n-butyl (meth)acrylate and 2-ethylhexyl (meth)acrylate and more preferably include n-butyl acrylate and 2-ethylhexyl acrylate in that the effect of the present invention can be further exhibited.

Examples of the at least one selected from the group consisting of a (meth)acrylic acid ester having an OH group and (meth)acrylic acid, namely (Component b), include (meth)acrylic acid esters each having an OH group, such as hydroxyethyl (meth)acrylate, hydroxypropyl (meth)acrylate, and hydroxybutyl (meth)acrylate, and (meth)acrylic acid. Among these, the examples of the at least one selected from the group consisting of a (meth)acrylic acid ester having an OH group and (meth)acrylic acid, namely (Component b), preferably include hydroxyethyl (meth)acrylate and (meth) acrylic acid and more preferably include hydroxyethyl acrylate and acrylic acid in that the effect of the present invention can be further exhibited.

Composition (A) may include a copolymerizable monomer other than (Composition a) or (Composition b). The copolymerizable monomer may be composed of only one copolymerizable monomer, or may be composed of two or more copolymerizable monomers. Examples of the copolymerizable monomer include: carboxyl-containing monomers (excluding (meth)acrylic acid) such as itaconic acid, maleic acid, fumaric acid, crotonic acid, isocrotonic acid, and acid anhydrides thereof (such as acid-anhydride-containing monomers such as maleic anhydride and itaconic anhydride); amide-containing monomers such as (meth)acrylamide, N,N-dimethyl (meth)acrylamide, N-methylol (meth)acrylamide, N-methoxymethyl (meth)acrylamide, N-butoxymethyl (meth)acrylamide, and N-hydroxyethyl (meth)acrylamide; amino-containing monomers such as aminoethyl (meth)acrylate, dimethylaminoethyl (meth)acrylate, and t-butylaminoethyl (meth)acrylate; epoxy-containing monomers such as glycidyl (meth)acrylate and methylglycidyl (meth)acrylate; cyano-containing monomers such as acrylonitrile and methacrylonitrile; heterocycle-containing vinyl monomers such as N-vinyl-2-psyrrolidone, (meth)acryloylmorpholine, N-vinylpiperidone, N-vinylpiperazine, N-vinylpyrrole, N-vinylimidazole, vinylpyridine, vinylpyrimidine, and vinyloxazole; sulfonic acid-containing monomers such as sodium vinylsulfonate; phosphate-containing monomers such as 2-hydroxyethylacryloyl phosphate; imide-containing monomers such as cyclohexylmaleimide and isopropylmaleimide; isocyanate-containing monomers such as 2-methacryloyloxyethyl isocyanate; alicyclic-hydrocarbon-containing (meth)acrylic acid esters such as cyclopentyl (meth)acrylate, cyclohexyl (meth)acrylate, and isobornyl (meth)acrylate; aromatic-hydrocarbon-containing (meth)acrylic acid esters such as phenyl (meth)acrylate, phenoxyethyl (meth)acrylate, and benzyl (meth)acrylate; vinyl esters such as vinyl acetate and vinyl propionate; aromatic vinyl compounds such as styrene and vinyltoluene; olefins and dienes such as ethylene, butadiene, isoprene, and isobutylene; vinyl ethers such as vinylalkyl ether; and vinyl chloride.

A polyfunctional monomer can also be adopted as the copolymerizable monomer. The polyfunctional monomer is a monomer having two or more ethylenically unsaturated groups per molecule. An appropriate ethylenically unsaturated group can be adopted as the ethylenically unsaturated group unless the effect of the present invention is impaired. Examples of the ethylenically unsaturated group include radical polymerizable functional groups such as a vinyl group, a propenyl group, an isopropenyl group, a vinyl ether group (vinyloxy group), and an allyl ether group (allyloxy group). Examples of the polyfunctional monomer include hexanediol di(meth)acrylate, butanediol di(meth)acrylate, (poly)ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, trimethylolpropane tri(meth) acrylate, tetramethylolmethane tri(meth)acrylate, allyl (meth)acrylate, vinyl (meth)acrylate, divinylbenzene, epoxy acrylate, polyester acrylate, and urethane acrylate. The polyfunctional monomer may be composed of only one polyfunctional monomer, or may be composed of two or more polyfunctional monomers.

A (meth)acrylic acid alkoxyalkyl ester can also be adopted as the copolymerizable monomer. Examples of the (meth)acrylic acid alkoxyalkyl ester include 2-methoxyethyl (meth)acrylate, 2-ethoxyethyl (meth)acrylate, methoxytriethylene glycol (meth)acrylate, 3-methoxypropyl (meth)acrylate, 3-ethoxypropyl (meth)acrylate, 4-methoxybutyl (meth)acrylate, and 4-ethoxybutyl (meth)acrylate. The (meth)acrylic acid alkoxyalkyl ester may be composed of only one (meth) acrylic acid alkoxyalkyl ester, or may be composed of two or more (meth)acrylic acid alkoxyalkyl esters.

An amount of the (meth)acrylic acid alkyl ester whose alkyl ester moiety has an alkyl group having 4 to 12 carbon atoms, namely (Component a), is preferably 50 weight% or more, more preferably 60 weight% to 100 weight%, even more preferably 70 weight% to 100 weight%, and particularly preferably 80 weight% to 100 weight% with respect to a total amount (100 weight%) of the monomer components forming the acrylic polymer in that the effect of the present invention can be further exhibited.

An amount of the at least one selected from the group consisting of a (meth)acrylic acid ester having an OH group and (meth)acrylic acid, namely (Component b), is preferably 0.1 weight% or more, more preferably 1.0 weight% to 50 weight%, even more preferably 1.5 weight% to 40 weight%, and particularly preferably 2.0 weight% to 30 weight% with respect to the total amount (100 weight%) of the monomer components forming the acrylic polymer in that the effect of the present invention can be further exhibited.

The sum of the amounts of (Component a), (Component b), and the carboxyl-containing monomer is preferably 5 weight% to 95 weight%, more preferably 10 weight% to 95 weight%, even more preferably 15 weight% to 95 weight%, even more preferably 20 weight% to 95 weight%, even more preferably 25 weight% to 95 weight%, even more preferably 30 weight% to 95 weight%, particularly preferably 35 weight% to 90 weight%, and most preferably 40 weight% to 90 weight% with respect to the total amount (100 weight%) of the monomer components forming the acrylic polymer.

Composition (A) can include an appropriate additional component unless the effect of the present invention is impaired. Examples of the additional component include a polymerization initiator, a chain transfer agent, and a solvent. Regarding an amount of the additional component, an appropriate amount can be adopted unless the effect of the present invention is impaired.

As for the polymerization initiator, a thermal polymerization initiator, a photopolymerization initiator (photoinitiator), or the like can be adopted according to the type of polymerization reaction. The polymerization initiator may be composed of only one polymerization initiator, or may be composed of two or more polymerization initiators.

A thermal polymerization initiator can be adopted preferably in the case where solution polymerization will be performed to obtain the acrylic polymer. Examples of the thermal polymerization initiator include an azo polymerization initiator, a peroxide polymerization initiator (such as dibenzoyl peroxide or tert-butyl permaleate), and a redox polymerization initiator. Among such thermal polymerization initiators, an azo initiator disclosed in JP 2002-69411 A is particularly preferred. Such an azo polymerization initiator is preferred because a decomposition product of the polymerization initiator is not likely to remain in the acrylic polymer as a portion that will be a cause of a heat-generated gas (outgas). Examples of the azo polymerization initiator include 2,2'-azobisisobutyronitrile (which may be hereinafter referred to as AIBN), 2,2'-azobis-2-methylbutyronitrile (which may be hereinafter referred to as AMBN), 2,2'-azobis(2-methylpropionic acid) dimethyl, and 4,4'-azobis-4-cyanovaleric acid. An amount of the azo polymerization initiator used is preferably 0.01 parts by weight to 5.0 parts by weight, more preferably 0.05 parts by weight to 4.0 parts by weight, even more preferably 0.1 parts by weight to 3.0 parts by weight, particularly preferably 0.15 parts by weight to 3.0 parts by weight, and most preferably 0.20 parts by weight to 2.0 parts by weight with respect to the total amount (100 weight%) of the monomer components forming the acrylic polymer.

A photopolymerization initiator can be adopted preferably in the case where active energy ray polymerization will be performed to obtain the acrylic polymer. Examples of the photopolymerization initiator include a benzoin-ether-based photopolymerization initiator, an acetophenone-based photopolymerization initiator, an $\alpha$-ketol-based photopolymerization initiator, an aromatic-sulfonyl-chloride-based photopolymerization initiator, a photoactive-oxime-based photopolymerization initiator, a benzoin-based photopolymerization initiator, a benzil-based photopolymerization initiator, a benzophenone-based photopolymerization initiator, a ketal-based photopolymerization initiator, and a thioxanthone-based photopolymerization initiator.

Examples of the benzoin-ether-based photopolymerization initiator include benzoin methyl ether, benzoin ethyl ether, benzoin propyl ether, benzoin isopropyl ether, benzoin isobutyl ether, 2,2-dimethoxy-1,2-diphenylethan-1-one, and anisole methyl ether. Examples of the acetophenone-based photopolymerization initiator include 2,2-diethoxyacetophenone, 2,2-dimethoxy-2-phenylacetophenone, 1-hydroxycyclohexyl phenyl ketone, 4-phenoxydichloroacetophenone, and 4-(t-butyl)dichloroacetophenone. Examples of the $\alpha$-ketol-based photopolymerization initiator include 2-methyl-2-hydroxypropiophenone and 1-[4-(2-hydroxyethyl)phenyl]-2-methylpropane-1-one. Examples of the aromatic-sulfonyl-chloride-based photopolymerization initiator include 2-naphthalenesulfonyl chloride. Examples of the photoactive-oxime-based photopolymerization initiator include 1-phenyl-1,1-propanedione-2-(o-ethoxycarbonyl)-oxime. Examples of the benzoin-based photopolymerization initiator include benzoin. Examples of the benzil-based photopolymerization initiator include benzil. Examples of the benzophenone-based photopolymerization initiator include benzophenone, benzoyl benzoic acid, 3,3'-dimethyl-4-methoxybenzophenone, polyvinylbenzophenone, and $\alpha$-hydroxycyclohexyl phenyl ketone. Examples of the ketal-based photopolymerization initiator include benzyl dimethyl ketal. Examples of the thioxanthone-based photopolymerization initiator include thioxanthone, 2-chlorothioxanthone, 2-methylthioxanthone, 2,4-dimethylthioxanthone, isopropylthioxanthone, 2,4-diisopropylthioxanthone, and dodecylthioxanthone.

An amount of the photopolymerization initiator used is preferably 0.01 parts by weight to 3.0 parts by weight, more preferably 0.015 parts by weight to 2.0 parts by weight, even more preferably 0.02 parts by weight to 1.5 parts by weight, particularly preferably 0.025 parts by weight to 1.0 part by weight, and most preferably 0.03 parts by weight to 0.50 parts by weight with respect to the total amount (100 weight%) of the monomer components forming the acrylic polymer.

The acrylic pressure-sensitive adhesive composition may include the crosslinking agent. Cohesion of the acrylic pressure-sensitive adhesive can be enhanced by including the crosslinking agent, and thus the effect of the present invention can be further exhibited. The crosslinking agent may be composed of only one crosslinking agent, or may be composed of two or more crosslinking agents.

Examples of the crosslinking agent include a polyfunctional-isocyanate-based crosslinking agent, an epoxy-based crosslinking agent, a melamine-based crosslinking agent, a peroxide-based crosslinking agent, an urea-based crosslinking agent, a metal-alkoxide-based crosslinking agent, a metal-chelate-based crosslinking agent, a metal-salt-based crosslinking agent, a carbodiimide-based crosslinking agent, an oxazoline-based crosslinking agent, an aziridine-based crosslinking agent, and an amine-based crosslinking agent. Among these, the crosslinking agent is preferably (Component c) which is at least one selected from the group consisting of a polyfunctional-isocyanate-based crosslinking agent and an epoxy-based crosslinking agent in that the effect of the present invention can be further exhibited.

Examples of the polyfunctional-isocyanate-based crosslinking agent include lower aliphatic polyisocyanates such as 1,2-ethylene diisocyanate, 1,4-butylene diisocyanate, and 1,6-hexamethylene diisocyanate; alicyclic polyisocyanates such as cyclopentylene diisocyanate, cyclohexylene diisocyanate, isophorone diisocyanate, hydrogenated tolylene diisocyanate, and hydrogenated xylene diisocyanate; aromatic polyisocyanates such as 2,4-tolylene diisocyanate, 2,6-tolylene diisocyanate, 4,4'-diphenylmethane diisocyanate, xylylene diisocyanate, and polymethylene polyphenyl polyisocyanate; isocyanate adducts such as trimethylolpropane/tolylene diisocyanate adducts (such as one manufactured under the product name "Coronate L" by Nippon Polyurethane Industry Co., Ltd. or Tosoh Corporation and one manufactured under the product name "TAKENATE D101E" by Mitsui Chemicals, Inc.), trimethylolpropane/hexamethylene diisocyanate adducts (such as one manufactured under the product name "Coronate HL" by Nippon Polyurethane Industry Co., Ltd. or Tosoh Corporation), and isocyanurate compounds of hexamethylene diisocyanate (such as one manufactured under the product name "Coronate HX" by Nippon Polyurethane Industry Co., Ltd. or Tosoh Corporation); trimethylolpropane/xylylene diisocyanate adducts (such as one manufactured under the product name "TAKENATE D 110N" by Mitsui Chemicals, Inc. and one manufactured under the product name "TAKENATE D 120N" by Mitsui Chemicals, Inc.), trimethylolpropane/isophorone diisocyanate adducts (such as one manufactured under the product name "TAKENATE D 140N" by Mitsui Chemicals, Inc.), trimethylolpropane/hexamethylene diisocyanate adducts (such as one manufactured under the product name "TAKENATE D 160N" by Mitsui Chemicals, Inc.); polyether polyisocyanate, polyester polyisocyanate, and adducts of each of these and a polyol; and polyisocyanates polyfunctionalized by forming an isocyanurate bond, a biuret bond, an allophanate bond, or the like.

A polyfunctional epoxy compound having two or more epoxy groups per molecule can be used as the epoxy-based crosslinking agent (polyfunctional epoxy compound). Examples of the epoxy-based crosslinking agent include N,N,N',N'-tetraglycidyl-m-xylenediamine, diglycidyl aniline, 1,3-bis(N,N-diglycidylaminomethyl)cyclohexane, 1,6-hexanediol diglycidyl ether, neopentyl glycol diglycidyl ether, ethylene glycol diglycidyl ether, propylene glycol diglycidyl ether, polyethylene glycol diglycidyl ether, polypropylene glycol diglycidyl ether, sorbitol polyglycidyl ether, glycerol polyglycidyl ether, pentaerythritol polyglycidyl ether, polyglycerol polyglycidyl ether, sorbitan polyglycidyl ether, trimethylolpropane polyglycidyl ether, adipic acid diglycidyl ester, o-phthalic acid diglycidyl ester, triglycidyl-tris(2-hydroxyethyl)isocyanurate, resorcin diglycidyl ether, bisphenol-S-diglycidyl ether, and an epoxy-based resin having two or more epoxy groups per molecule. Examples of the epoxy-based crosslinking agent also include commercially-available products, for example, manufactured under the product names "TETRAD C" and "TETRAD X" by Mitsubishi Gas Chemical Company, Inc.

Regarding an amount of the crosslinking agent in the acrylic pressure-sensitive adhesive composition, an appropriate amount can be adopted unless the effect of the present invention is impaired. The amount thereof is, for example, preferably 0.1 parts by weight to 5.0 parts by weight, more preferably 0.2 parts by weight to 4.5 parts by weight, even more preferably 0.3 parts by weight to 4.0 parts by weight, and particularly preferably 0.4 parts by weight to 3.5 parts by weight with respect to solids (100 parts by weight) of the acrylic polymer in that the effect of the present invention can be further exhibited.

The acrylic pressure-sensitive adhesive composition can include an appropriate additional component unless the effect of the present invention is impaired. Examples of the additional component include a polymer component other than the acrylic polymer, a crosslinking accelerator, a crosslinking catalyst, a silane coupling agent, a tackifier resin (such as a rosin derivative, a polyterpene resin, a petroleum resin, or an oil-soluble phenol), an anti-aging agent, an inorganic filler, an organic filler, a metal powder, a colorant (such as a pigment or a dye), a foil-shaped component, an ultraviolet absorbent, an antioxidant, a light stabilizer, a chain transfer agent, a plasticizer, a softener, a surfactant, an antistatic agent, a conductive agent, a stabilizer, a surface lubricant, a leveling agent, a corrosion inhibitor, a heat-resistant stabilizer, a polymerization inhibitor, a lubricant, a solvent, and a catalyst.

<1-1-b. Pressure-sensitive adhesive treatment solution>

The pressure-sensitive adhesive treatment solution contains the liquid having a Hansen solubility parameter of 31 or less and the alkaline compound.

The term "liquid" as used in the present invention refers to one that is liquid at ordinary temperature and ordinary pressure, and examples of liquids commonly include water, alcohols, and various other solvents.

The liquid having a Hansen solubility parameter of 31 or less may be composed of only one liquid, or may be composed of two or more liquids.

A Hansen solubility parameter is a parameter determined by dividing a Hildebrand solubility parameter into three components which are a dispersion term ($\delta_D$), a polar term ($\delta_p$), and a hydrogen bonding term ($\delta_H$) and taking the polarity of a substance into account, and is sometimes abbreviated as "HSP". The dispersion term (the term relating to the van der Waals force), the polar term (the term relating to a dipole moment), and the hydrogen bonding term (the term relating to a hydrogen bond) can be expressed as three-dimensional coordinates.

A Hansen solubility parameter of a liquid mixture of two or more liquids can be determined by the following equation (1) as a weighted average m of the HSP values of the solvents. It should be noted that δ1 and δ2 are HSP values of the liquid components, and φ1 and φ2 are volume fractions of the liquid components.

$$m = \delta 1 \varphi 1 + \delta 2 \varphi 2 \qquad (1)$$

The Hansen solubility parameters of solvents are included in "HSPiP version 5". For solvents not included therein, values estimated from "HSPiP version 5" are used.

The Hansen solubility parameter of the liquid is 31 or less, and is preferably 30 or less, more preferably 29 or less, even more preferably 28 or less, and particularly preferably 25 or less. The lower limit of the Hansen solubility parameter of the liquid is preferably 7 or more, more preferably 10 or more, even more preferably 13 or more, and particularly preferably 15 or more. When the Hansen solubility parameter of the liquid is in the above range, preferably 10 or more and 30 or less, more preferably 15 or more and 25 or less, the hydrophilic polymer can be effectively produced from the acrylic pressure-sensitive adhesive.

In the case where the Hansen solubility parameter of the liquid is over 31, for example, the penetrability of the pressure-sensitive adhesive treatment solution into the acrylic pressure-sensitive adhesive may deteriorate and thus the production efficiency of the hydrophilic polymer may decrease. Similarly, in the case where the Hansen solubility parameter of the liquid is less than 7, for example, the penetrability of the pressure-sensitive adhesive treatment solution into the acrylic pressure-sensitive adhesive may deteriorate and thus the production efficiency of the hydrophilic polymer may decrease, although not as much as the case of over 31.

Typical examples of the liquid having a Hansen solubility parameter of 31 or less and being a single-component liquid include the following liquids. One of these liquids may be used alone, or two or more of these liquids may be used in combination.

Alcohols: methanol (HSP = 29.6), ethanol (HSP = 26.5), 1-propanol (HSP = 24.6), 2-propanol (IPA) (HSP = 23.6), 1-butanol (HSP = 23.2), 1-pentanol (HSP = 21.7), 1-hexanol (HSP = 21.2), benzyl alcohol (HSP = 23.8), diethylene glycol (HSP = 27.9), dipropylene glycol (HSP = 26.4)

Hydrocarbons: benzene (HSP = 18.5), toluene (HSP = 18.2), styrene (HSP = 19.1), hexane (HSP = 14.9), cyclohexane (HSP = 16.8), heptane (HSP = 15.3), methylcyclohexane (HSP = 16.0)

Ketones: acetone (HSP = 19.9), methyl ethyl ketone (HSP = 19.1)
Esters: ethyl acetate (HSP = 18.2)
Ethers: tetrahydrofuran (HSP = 19.5), cyclopentyl methyl ether (HSP = 17.8)
Amines: aniline (HSP = 23.7)
Nitriles: acetonitrile (HSP = 24.4)
Carboxylic acids: acetic acid (HSP = 21.4)
Terpenes: d-limonene (HSP = 17.8)

The liquid having a Hansen solubility parameter of 31 or less may be a liquid mixture including a combination of the above liquid having a Hansen solubility parameter of 31 or less and being a single-component liquid and another liquid. In this case, a liquid mixture whose m determined by the above equation (1) and being a Hansen solubility parameter is 31 or less can be used as the liquid mixture. The solvent that can be included in the liquid mixture including a combination of a plurality of liquids is, for example, water (HSP = 47.8). For example, water and ethanol can be used at a ratio of water (HSP = 47.8) to ethanol (HSP = 26.5) = 20%/80% in terms of volume fraction because, in that case, m = 30.76 is established.

The liquid having a Hansen solubility parameter of 31 or less preferably includes at least one selected from the

group consisting of an alcohol, a hydrocarbon, a ketone, an ester, an ether, an amine, a nitrile, a carboxylic acid, and a terpene.

The liquid having a Hansen solubility parameter of 31 or less preferably essentially includes the alcohol from the viewpoint of, for example, the solubility of the alkaline compound.

In the present invention, to distinguish from the alcohol used in step (II), the alcohol that can be included in the liquid having a Hansen solubility parameter of 31 or less and that is used in step (I) may be referred to as "alcohol (A1)". Likewise, as described below, the alcohol used in step (II) may be referred to as "alcohol (A2)".

An appropriate alcohol can be adopted as the alcohol (A1) unless the effect of the present invention is impaired. The alcohol (A1) preferably includes an alcohol having 1 to 8 carbon atoms. Examples of the alcohol having 1 to 8 carbon atoms can include not only primary alcohols but also secondary alcohols such as 2-propanol, propylene glycol monopropyl ether, and propylene glycol monoethyl ether and tertiary alcohols such as t-butyl alcohol. The alcohol (A1) may be composed of only one alcohol, or may be composed of two or more alcohols.

Examples of the alcohol having 1 to 8 carbon atoms include methanol, ethanol, 1-propanol, 2-propanol, 1-butanol, 1-pentanol, 1-hexanol, cyclohexanol, benzyl alcohol, 1-heptanol, 1-octanol, and 2-ethylhexanol. The alcohol having 1 to 8 carbon atoms is preferably a lower alcohol having 1 to 5 carbon atoms (typically at least one selected from the group consisting of methanol, ethanol, 1-propanol, 2-propanol, 1-butanol, and 1-pentanol), and more preferably a lower alcohol having 1 to 4 carbon atoms (typically at least one selected from the group consisting of methanol, ethanol, 1-propanol, 2-propanol, and 1-butanol).

In the case where the acrylic pressure-sensitive adhesive used in step (I) has a - COO-$R^1$ group (i.e., the base polymer included in the acrylic pressure-sensitive adhesive composition for production of the acrylic pressure-sensitive adhesive used in step (I) has a -COO-$R^1$ group) and a structure of the alcohol (A1) is $R^{21}$-OH, the $R^1$ and the $R^{21}$ may be the same or different.

The liquid having a Hansen solubility parameter of 31 or less preferably includes an organic solvent other than the alcohol (A1) in addition to the alcohol (A1). One organic solvent other than the alcohol (A1) may be used alone, or two or more organic solvents other than the alcohol (A1) may be used in combination. Examples of the organic solvent other than the alcohol (A1) include the above ethers and the above hydrocarbons. The organic solvent other than the alcohol (A1) is preferably at least one selected from the group consisting of toluene, cyclopentyl methyl ether, and tetrahydrofuran, and more preferably at least one selected from the group consisting of toluene and cyclopentyl methyl ether. When the liquid having a Hansen solubility parameter of 31 or less is a solvent mixture of the alcohol (A1) and the organic solvent (preferably at least one selected from the group consisting of the ethers and the hydrocarbons), for example, the penetrability of the pressure-sensitive adhesive treatment solution into the acrylic pressure-sensitive adhesive and the production efficiency of the hydrophilic polymer can be enhanced.

When the liquid having a Hansen solubility parameter of 31 or less includes the alcohol (A1) and the organic solvent (preferably at least one selected from the group consisting of the ethers and the hydrocarbons) other than the alcohol (A1), a volume ratio (organic solvent:alcohol) between the organic solvent and the alcohol (A1) is preferably 10:90 to 99:1, more preferably 20:80 to 95:5, even more preferably 30:70 to 90:10, particularly preferably 40:60 to 90:10, and most preferably 60:40 to 80:20. When the volume ratio between the organic solvent and the alcohol (A1) is in the above range, for example, the penetrability of the pressure-sensitive adhesive treatment solution into the acrylic pressure-sensitive adhesive can be further enhanced and the production efficiency of the hydrophilic polymer can be stably enhanced.

An appropriate alkaline compound can be adopted as the alkaline compound unless the effect of the present invention is impaired. Examples of the alkaline compound include hydroxides, carbonates, and the like, such as potassium hydroxide, sodium hydroxide, and calcium hydroxide, of alkali metals and alkaline earth metals and metal alkoxides, such as sodium methoxide, sodium ethoxide, and potassium t-butoxide. The alkaline compound is preferably at least one selected from the group consisting of potassium hydroxide, sodium hydroxide, and sodium ethoxide.

A concentration of the alkaline compound in the pressure-sensitive adhesive treatment solution is preferably 0.001 weight% to 20 weight%, more preferably 0.01 weight% to 10 weight%, even more preferably 0.01 weight% to 8 weight%, particularly preferably 0.01 weight% to 5 weight%, and most preferably 0.5 weight% to 1.5 weight%. When the concentration of the alkaline compound in the pressure-sensitive adhesive treatment solution is in the above range, the hydrophilic polymer can be produced even more stably from the acrylic pressure-sensitive adhesive under mild conditions. If the concentration of the alkaline compound in the pressure-sensitive adhesive treatment solution is more than 20 weight%, the alkaline compound may be difficult to dissolve in the treatment solvent (the liquid having a Hansen solubility parameter of 31 or less).

The pressure-sensitive adhesive treatment solution may contain an additional additive. An appropriate additive can be adopted as the additional additive unless the effect of the present invention is impaired.

<<1-2. Step (II)>>

Step (II) is a step of reacting the hydrophilic polymer obtained in step (I) and the alcohol (A2) to produce a recycled acrylic polymer.

In step (II), an appropriate method can be adopted as the method for reacting the hydrophilic polymer obtained in step (I) and the alcohol (A2) unless the effect of the present invention is impaired. The method preferably includes stirring the hydrophilic polymer obtained in step (I) in the alcohol (A2) under the presence of an appropriate catalyst as necessary.

Regarding a usage ratio of the hydrophilic polymer obtained in step (I) and the alcohol (A2), an appropriate usage ratio can be adopted according to the type of hydrophilic polymer used, the type of alcohol (A2) used, and the like unless the effect of the present invention is impaired. The usage ratio is, for example, preferably 1:0.5 to 1:50, more preferably 1:1 to 1:30, even more preferably 1:3 to 1:20, and particularly preferably 1:5 to 1:10 on a weight basis.

An appropriate alcohol can be adopted as the alcohol (A2) unless the effect of the present invention is impaired. The alcohol (A2) may be a monohydric alcohol, a dihydric alcohol, or a trihydric or higher alcohol. Examples of the alcohol (A2) include an alcohol having 1 to 12 carbon atoms. Examples of the monohydric alcohol include methanol, ethanol, 1-propanol, 2-propanol, 1-butanol, isobutyl alcohol, 2-butanol, tert-butanol, 1-pentanol, 3-methyl-1-butanol, 2-methyl-1-butanol, 2,2-dimethyl-1-propanol, 2-pentanol, 3-methyl-2-butanol, 3-pentanol, 2-methyl-2-butanol, 1-hexanol, 2-hexanol, 3-hexanol, 2-methyl-1-pentanol, 3-methyl-1-pentanol, 4-methyl-1-pentanol, 2-methyl-2-pentanol, 3-methyl-2-pentanol, 4-methyl-2-pentanol, 2-methyl-3-pentanol, 3-methyl-3-pentanol, 2,2-dimethyl-1-butanol, 2,3-dimethyl-1-butanol, 3,3-dimethyl-1-butanol, 2,3-dimethyl-2-butanol, 3,3-dimethyl-2-butanol, 2-ethyl-1-butanol, cyclohexanol, benzyl alcohol, 1-heptanol, 2-heptanol, 3-heptanol, 4-heptanol, 1-octanol, isooctanol, 2-ethylhexanol, 1-nonanol, 1-decanol, and 1-dodecanol. Examples of the dihydric alcohol include ethylene glycol, diethylene glycol, propylene glycol, butylene glycol, 1,4-cyclohexane dimethanol, and neopentyl glycol. Examples of the trihydric or higher alcohol include glycerin and polyvinyl alcohol. The alcohol (A2) is preferably methanol, ethanol, 1-propanol, 1-butanol, 1-pentanol, 1-hexanol, 1-heptanol, 1-octanol, or 2-ethylhexanol in that the effect of the present invention can be further exhibited. The alcohol (A2) may be composed of only one alcohol, or may be composed of two or more alcohols.

Regarding the catalyst, an appropriate catalyst can be adopted unless the effect of the present invention is impaired. Examples of the catalyst include sulfuric acid, hydrochloric acid, nitric acid, p-toluenesulfonic acid, boron trifluoride, trifluoroacetic acid, and a heavy metal salt catalyst.

Regarding an amount of the catalyst used, an appropriate amount can be adopted unless the effect of the present invention is impaired. The amount is preferably 0.01 equivalents to 5 equivalents, more preferably 0.05 equivalents to 3 equivalents, even more preferably 0.1 equivalents to 2 equivalents, and particularly preferably 0.15 equivalents to 1 equivalent with respect to 1 equivalent of the hydrophilic polymer obtained in step (I) in that the effect of the present invention can be further exhibited. It should be noted that when the hydrophilic polymer is a carboxylic acid salt of an alkali metal or the like, an appropriate acid may be added in an amount necessary for neutralization separately from an acid as the catalyst for esterification.

Regarding a stirring method, an appropriate stirring method can be adopted appropriately unless the effect of the present invention is impaired. Regarding the stirring time as well, an appropriate stirring time can be adopted appropriately unless the effect of the present invention is impaired.

Regarding a reaction temperature in step (II), an appropriate reaction temperature can be adopted appropriately unless the effect of the present invention is impaired. The reaction temperature is preferably 50°C or higher, more preferably 70°C or higher, even more preferably 80°C or higher, and particularly preferably 90°C or higher in that the effect of the present invention can be further exhibited. The upper limit thereof is preferably 350°C or lower, more preferably 300°C or lower, even more preferably 275°C or lower, and particularly preferably 250°C or lower.

An additional additive may be used for the reaction in step (II). An appropriate additive can be adopted as the additional additive unless the effect of the present invention is impaired.

It is inferred that by step (II), esterification of a carboxylic acid portion progresses by a Fischer esterification reaction. A recycled acrylic polymer derived from the acrylic pressure-sensitive adhesive is formed thereby. Here, the "recycled acrylic polymer derived from the acrylic pressure-sensitive adhesive" means an acrylic polymer having a structure derived from the base polymer used to form the acrylic pressure-sensitive adhesive, and specifically means, for example, an acrylic polymer having a molecular weight derived from the acrylic pressure-sensitive adhesive, the acrylic polymer including, for example, a side chain that does not contribute to a hydrolysis reaction and an esterification reaction.

A weight-average molecular weight of the recycled acrylic polymer obtained in step (II) is preferably 100,000 to 3,000,000, more preferably 150,000 to 2,000,000, even more preferably 200,000 to 1,500,000, and particularly preferably 250,000 to 1,000,000.

A Tg (glass transition temperature) of the recycled acrylic polymer obtained in step (II) is preferably -100°C to 30°C, more preferably -95°C to 20°C, even more preferably -90°C to 10°C, and particularly preferably -80°C to 0°C.

In the case where the acrylic pressure-sensitive adhesive used in step (I) has a - $COO-R^1$ group (i.e., the base polymer included in the acrylic pressure-sensitive adhesive composition for production of the acrylic pressure-sensitive

adhesive used in step (I) has a -COO-$R^1$ group) and a structure of the alcohol (A2) is $R^{22}$-OH, the $R^1$ and the $R^{22}$ may be the same or different. In the above case, when the $R^1$ and the $R^{22}$ are the same, the recycled acrylic polymer obtained in step (II) can have the same ester structure as that of the base polymer included in the acrylic pressure-sensitive adhesive composition for production of the acrylic pressure-sensitive adhesive used in step (I). In the above case, when the $R^1$ and the $R^{22}$ are different, the recycled acrylic polymer obtained in step (II) has an ester structure different from that of the base polymer included in the acrylic pressure-sensitive adhesive composition for production of the acrylic pressure-sensitive adhesive used in step (I).

The recycled acrylic polymer obtained in step (II) typically includes a structural unit (1) represented by the following formula and a structural unit (2) represented by the following formula.

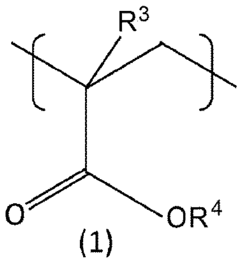
(1)

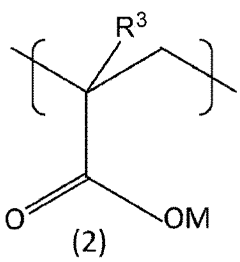
(2)

(In the formula, $R^3$ represents a hydrogen atom or a methyl group. The symbol $R^4$ represents an alkyl group having 1 to 12 carbon atoms. The symbol M represents a hydrogen atom or a cation.)

The recycled acrylic polymer obtained in step (II) typically includes a plurality of the structural units (1) and a plurality of the structural units (2). In a molecular chain of the recycled acrylic polymer obtained in step (II), the structural units (1) and (2) are typically disposed at random.

In the structural units (1) and (2), $R^3$ represents a hydrogen atom or a methyl group, and is preferably a hydrogen atom. In the plurality of structural units (1), $R^3$s may be the same or different. In the structural units (1) and (2), $R^1$s may be the same or different. When the recycled acrylic polymer obtained in step (II) has the structural unit (1), the glass transition temperature of the recycled acrylic polymer decreases and the flexibility at room temperature is enhanced. When the recycled acrylic polymer obtained in step (II) has the structural unit (2), the recycled acrylic polymer is soluble in water. When the recycled acrylic polymer obtained in step (II) has the structural units (1) and (2), the recycled acrylic polymer obtained in step (II) can be a raw material suitable as a base polymer of pressure-sensitive adhesives.

In the structural unit (1), the alkyl group represented by $R^4$ is preferably an alkyl group having 1 to 10 carbon atoms, and more preferably a methyl group, an ethyl group, an n-butyl group, or a 2-ethylhexyl group. In the plurality of structural units (1), $R^4$s may be the same or different.

In the structural unit (2), the cation represented by M is preferably an alkali metal cation or an alkaline earth metal cation, more preferably an alkali metal cation, and even more preferably a potassium cation or a sodium cation. In the plurality of structural units (2), Ms may be the same or different.

A content of the structural unit (1) in the recycled acrylic polymer obtained in step (II) is preferably 1 weight% or more, more preferably 3 weight% or more, even more preferably 5 weight% or more, and particularly preferably 10 weight% or more. The upper limit thereof is preferably 95 weight% or less, more preferably 90 weight% or less, even more preferably 85 weight% or less, and particularly preferably 80 weight% or less.

A content of the structural unit (2) in the recycled acrylic polymer obtained in step (II) is preferably 5 weight% or more, more preferably 10 weight% or more, even more preferably 15 weight% or more, and particularly preferably 20 weight% or more. The upper limit thereof is preferably 95 weight% or less, more preferably 90 weight% or less, even more preferably 87 weight% or less, and particularly preferably 85 weight% or less.

The content of the structural unit (1) with respect to a total of the contents of the structural units (1) and (2) is preferably 5 weight% or more, more preferably 7 weight% or more, and even more preferably 10 weight% or more. The upper limit thereof is preferably 95 weight% or less, more preferably 90 weight% or less, even more preferably 93 weight% or less, and particularly preferably 90 weight% or less.

The contents of the structural units can be measured, for example, by FT-IR, NMR, or titration.

<<1-3. Step (III)>>

The recycled acrylic pressure-sensitive adhesive producing method according to the embodiment of the present invention may include the step of (III) separating the acrylic pressure-sensitive adhesive from a pressure-sensitive adhesive tape. The pressure-sensitive adhesive tape used in step (III) is typically a pressure-sensitive adhesive tape as waste (sometimes referred to as "wasted pressure-sensitive adhesive tape"). Step (III) as described above makes it

possible to produce recycled acrylic pressure-sensitive adhesives using, as raw materials, waste pressure-sensitive adhesive tapes produced in a large amount on manufacturing sites and the like.

The acrylic pressure-sensitive adhesive separated in step (III) can be used in step (I). Therefore, preferably, step (III) can be included before step (I).

In step (III), the acrylic pressure-sensitive adhesive is separated from an appropriate pressure-sensitive adhesive tape. The pressure-sensitive adhesive tape is typically a substrate-less pressure-sensitive adhesive tape or a pressure-sensitive adhesive tape including a substrate (typically a pressure-sensitive adhesive tape including a pressure-sensitive adhesive layer formed of an acrylic pressure-sensitive adhesive and a substrate).

Regarding a method for separating the acrylic pressure-sensitive adhesive from the pressure-sensitive adhesive tape, an appropriate method can be adopted unless the effect of the present invention is impaired.

When the pressure-sensitive adhesive tape is a pressure-sensitive adhesive tape including a substrate (typically a pressure-sensitive adhesive tape including a pressure-sensitive adhesive layer formed of an acrylic pressure-sensitive adhesive and a substrate), one preferred embodiment of the method for separating the acrylic pressure-sensitive adhesive from the pressure-sensitive adhesive tape is a method for separating the acrylic pressure-sensitive adhesive forming the pressure-sensitive adhesive layer of the pressure-sensitive adhesive tape from the substrate layer by grinding the surface of the pressure-sensitive adhesive layer.

An appropriate grinding method can be adopted as the method for grinding the surface of the pressure-sensitive adhesive layer of the pressure-sensitive adhesive tape unless the effect of the present invention is impaired. The grinding method is, for example, a method involving a belt sander equipped with an abrasive belt. That is, an abrasive belt on a belt sander and the surface of the pressure-sensitive adhesive layer of the pressure-sensitive adhesive tape are brought into contact with each other. In this case, the pressure-sensitive adhesive layer of the pressure-sensitive adhesive tape may be pressed against the abrasive belt, the abrasive belt may be pressed against the pressure-sensitive adhesive layer of the pressure-sensitive adhesive tape, or, in a manner different from these, the abrasive belt and the surface of the pressure-sensitive adhesive layer of the pressure-sensitive adhesive tape may be brought into contact with each other.

<<1-4. Step (IV)>>

The recycled acrylic polymer obtained in step (II) may be directly used as a recycled acrylic pressure-sensitive adhesive, or may react with a crosslinking agent to give a recycled acrylic pressure-sensitive adhesive having a cross-linked structure. That is, the recycled acrylic pressure-sensitive adhesive producing method according to the embodiment of the present invention may include the step of (IV) reacting the recycled acrylic polymer obtained in step (II) and a crosslinking agent. Preferably, step (IV) can be included after step (II).

In step (IV), typically, the recycled acrylic polymer and the crosslinking agent are reacted together in the acrylic pressure-sensitive adhesive composition including the recycled acrylic polymer and the crosslinking agent. The recycled acrylic pressure-sensitive adhesive having a cross-linked structure can be obtained thereby.

The crosslinking agent can impart an appropriate cohesion to the recycled acrylic pressure-sensitive adhesive. The crosslinking agent can be included in a state after a crosslinking reaction, a state before a crosslinking reaction, a partially crosslinked state, an intermediate or composite state of these, or the like, in the recycled acrylic pressure-sensitive adhesive. The crosslinking agent is typically included in the state after a crosslinking reaction, in the recycled acrylic pressure-sensitive adhesive.

A content of the crosslinking agent in the acrylic pressure-sensitive adhesive composition is preferably 0.005 parts by mass to 10 parts by mass, more preferably 0.01 parts by mass to 5 parts by mass, even more preferably 0.01 parts by mass to 3 parts by mass, even more preferably 0.01 parts by mass to 1 part by mass, particularly preferably 0.01 parts by mass to 0.5 parts by mass, and most preferably 0.01 parts by mass to 0.2 parts by mass with respect to 100 parts by mass of the recycled acrylic polymer.

Examples of the crosslinking agent include an isocyanate-based crosslinking agent, an epoxy-based crosslinking agent, a silicone-based crosslinking agent, an oxazoline-based crosslinking agent, an aziridine-based crosslinking agent, a silane-based crosslinking agent, an alkyl-etherified-melamine-based crosslinking agent, a metal-chelate-based crosslinking agent, and a crosslinking agent of a peroxide. The crosslinking agent is preferably an isocyanate-based crosslinking agent or an epoxy-based crosslinking agent and more preferably an isocyanate-based crosslinking agent in that the effect of the present invention can be further exhibited.

A compound having two or more isocyanate groups (an isocyanate group includes an isocyanate-regeneration-type polar group in which an isocyanate group is temporarily protected, for example, using a blocking agent or by oligomerization) per molecule can be used as the isocyanate-based crosslinking agent. Examples of the isocyanate-based crosslinking agent include aromatic isocyanates such as tolylene diisocyanate and xylene diisocyanate; alicyclic isocyanates such as isophorone diisocyanate; and aliphatic isocyanates such as hexamethylene diisocyanate.

Examples of the isocyanate-based crosslinking agent include lower aliphatic polyisocyanates such as 1,2-ethylene diisocyanate, 1,4-butylene diisocyanate, and 1,6-hexamethylene diisocyanate; alicyclic polyisocyanates such

as cyclopentylene diisocyanate, cyclohexylene diisocyanate, isophorone diisocyanate, hydrogenated tolylene diisocyanate, and hydrogenated xylene diisocyanate; aromatic polyisocyanates such as 2,4-tolylene diisocyanate, 2,6-tolylene diisocyanate, 4,4'-diphenylmethane diisocyanate, xylylene diisocyanate, and polymethylene polyphenyl polyisocyanate; isocyanate adducts such as trimethylolpropane/tolylene diisocyanate adducts (such as one manufactured under the product name "Coronate L" by Nippon Polyurethane Industry Co., Ltd. or Tosoh Corporation and one manufactured under the product name "TAKENATE D101E" by Mitsui Chemicals, Inc.), trimethylolpropane/hexamethylene diisocyanate adducts (such as one manufactured under the product name "Coronate HL" by Nippon Polyurethane Industry Co., Ltd. or Tosoh Corporation), and isocyanurate compounds of hexamethylene diisocyanate (such as one manufactured under the product name "Coronate HX" by Nippon Polyurethane Industry Co., Ltd. or Tosoh Corporation); trimethylolpropane/xylylene diisocyanate adducts (such as one manufactured under the product name "TAKENATE D 110N" by Mitsui Chemicals, Inc. and one manufactured under the product name "TAKENATE D 120N" by Mitsui Chemicals, Inc.), trimethylolpropane/isophorone diisocyanate adducts (such as one manufactured under the product name "TAKENATE D 140N" by Mitsui Chemicals, Inc.), trimethylolpropane/hexamethylene diisocyanate adducts (such as one manufactured under the product name "TAKENATE D 160N" by Mitsui Chemicals, Inc.); polyether polyisocyanate, polyester polyisocyanate, and adducts of each of these and a polyol; and polyisocyanates polyfunctionalized by forming an isocyanurate bond, a biuret bond, an allophanate bond, or the like.

A polyfunctional epoxy compound having two or more epoxy groups per molecule can be used as the epoxy-based crosslinking agent. Examples of the epoxy-based crosslinking agent include N,N,N',N'-tetraglycidyl-m-xylenediamine, diglycidyl aniline, 1,3-bis(N,N-diglycidylaminomethyl)cyclohexane, 1,6-hexanediol diglycidyl ether, neopentyl glycol diglycidyl ether, ethylene glycol diglycidyl ether, propylene glycol diglycidyl ether, polyethylene glycol diglycidyl ether, polypropylene glycol diglycidyl ether, sorbitol polyglycidyl ether, glycerol polyglycidyl ether, pentaerythritol polyglycidyl ether, polyglycerol polyglycidyl ether, sorbitan polyglycidyl ether, trimethylolpropane polyglycidyl ether, adipic acid diglycidyl ester, o-phthalic acid diglycidyl ester, triglycidyl-tris(2-hydroxyethyl)isocyanurate, resorcin diglycidyl ether, bisphenol-S-diglycidyl ether, and an epoxy-based resin having two or more epoxy groups per molecule. Examples of the epoxy-based crosslinking agent include commercially-available products manufactured under the product names "TETRAD C" and "TETRAD X" by Mitsubishi Gas Chemical Company, Inc.

The acrylic pressure-sensitive adhesive composition may include, as necessary, a variety of additives, such as a catalyst, a solvent, a tackifier, a leveling agent, a crosslinking aid, a plasticizer, a softener, a filler, an antistatic agent, an anti-aging agent, an ultraviolet absorbent, an antioxidant, and a light stabilizer, that are common in the pressure-sensitive adhesive field. As for the variety of additives, conventionally known additives can be used by conventional manners.

Regarding the method for reacting the recycled acrylic polymer and the crosslinking agent in the acrylic pressure-sensitive adhesive composition including the recycled acrylic polymer and the crosslinking agent, an appropriate method can be adopted unless the effect of the present invention is impaired. The method is, for example, a method for producing the recycled acrylic pressure-sensitive adhesive in a sheet shape by applying the acrylic pressure-sensitive adhesive composition to an appropriate substrate, heating and drying the acrylic pressure-sensitive adhesive composition as necessary, curing the acrylic pressure-sensitive adhesive composition as necessary, and causing a crosslinking reaction on the substrate. Regarding the application method, an appropriate method can be adopted unless the effect of the present invention is impaired. Examples of the application method include methods involving a gravure roll coater, a reverse roll coater, a kiss roll coater, a dip roll coater, a bar coater, a knife coater, an air knife coater, a spray coater, a comma coater, a direct coater, and a roll brush coater. An appropriate method can be adopted for the heating and drying of the acrylic pressure-sensitive adhesive composition unless the effect of the present invention is impaired. The method for heating and drying is, for example, heating at approximately 60°C to approximately 180°C. An appropriate method can be adopted for curing the acrylic pressure-sensitive adhesive composition unless the effect of the present invention is impaired. Examples of the curing method include UV irradiation, laser beam irradiation, $\alpha$-irradiation, $\beta$-irradiation, $\gamma$-irradiation, X-irradiation, and electron beam irradiation.

<<<<2. Recycled acrylic pressure-sensitive adhesive tape>>>>

A recycled acrylic pressure-sensitive adhesive tape according to the embodiment of the present invention includes: a recycled acrylic pressure-sensitive adhesive obtained by the recycled acrylic pressure-sensitive adhesive producing method according to the embodiment of the present invention; and a substrate.

A thickness of the substrate is preferably 1 $\mu$m to 500 $\mu$m, more preferably 5 $\mu$m to 300 $\mu$m, even more preferably 10 $\mu$m to 100 $\mu$m, particularly preferably 15 $\mu$m to 80 $\mu$m, and most preferably 20 $\mu$m to 60 $\mu$m, considering its functionality as a pressure-sensitive adhesive tape.

An appropriate material can be adopted as a material of the substrate unless the effect of the present invention is impaired. The material of the substrate is typically a resin material.

Examples of the resin material as the material of the substrate include polyimide (PI), polyetheretherketone (PEEK), polyethylene terephthalate (PET), polyethylene naphthalate (PEN), polybutylene terephthalate (PBT), acrylic

resins such as polymethyl methacrylate (PMMA), polycarbonate, triacetyl cellulose (TAC), polysulfone, polyarylate, polyethylene (PE), polypropylene (PP), an ethylene-propylene copolymer, an ethylene-vinyl acetate copolymer (EVA), a polyamide (nylon), a fully aromatic polyamide (aramid), polyvinyl chloride (PVC), polyvinyl acetate, polyphenylene sulfide (PPS), fluorine resin, and a cyclic-olefin-based polymer.

The recycled acrylic pressure-sensitive adhesive tape according to the embodiment of the present invention can be produced by an appropriate method unless the effect of the present invention is impaired. Examples of the production method include:

(1) a method for producing the recycled acrylic pressure-sensitive adhesive on the substrate;
(2) a method for transferring the recycled acrylic pressure-sensitive adhesive produced on a release liner to the substrate; and
(3) a method for laminating the recycled acrylic pressure-sensitive adhesive on the substrate.

The recycled acrylic pressure-sensitive adhesive included in the recycled acrylic pressure-sensitive adhesive tape according to the embodiment of the present invention forms the pressure-sensitive adhesive layer on the substrate.

A thickness of the pressure-sensitive adhesive layer is preferably 1 μm to 250 μm, more preferably 2 μm to 150 μm, even more preferably 3 μm to 100 μm, and particularly preferably 5 μm to 50 μm considering its functionality as a pressure-sensitive adhesive tape.

Before used, the recycled acrylic pressure-sensitive adhesive tape according to the embodiment of the present invention may include an appropriate release liner on a surface of the pressure-sensitive adhesive layer, for example, for protection, the surface being farther from the substrate layer.

Examples of the release liner include a release liner including a substrate (linear substrate) that is made of paper, a plastic film, or the like and that has a surface treated with silicone and a release liner including a substrate (linear substrate) that is made of paper, a plastic film, or the like and that has a surface laminated with a polyolefin resin. Examples of the plastic film as the linear substrate include a polyethylene film, a polypropylene film, a polybutene film, a polybutadiene film, a polymethylpentene film, a polyvinyl chloride film, a vinyl chloride copolymer film, a polyethylene terephthalate film, a polybutylene terephthalate film, a polyurethane film, and an ethylene-vinyl acetate copolymer film.

A thickness of the release liner is preferably 1 μm to 500 μm, more preferably 3 μm to 450 μm, even more preferably 5 μm to 400 μm, and particularly preferably 10 μm to 300 μm.

## EXAMPLES

Hereinafter, the present invention will be described in detail with examples. The present invention is not limited to these examples. A test and an evaluation method for the examples, etc. are as described below. It should be noted that "part(s)" refers to "part(s) by weight" and "%" refers to "weight%" unless otherwise specified. Additionally, the term "room temperature" means 25°C.

### <Measurement of Tg>

DSC measurement was performed for Tg using a measurement apparatus DSC 2500 manufactured by TA Instruments.

### [Example 1]

A 5 cm-width acrylic pressure-sensitive adhesive tape (manufactured by Nitto Denko Corporation under the product name "No. 31B") was conveyed while a release liner thereof was being removed. Against an exposed pressure-sensitive adhesive layer thereof was pressed an abrasive belt (grit: #100; manufactured by Makita Corporation) on a belt sander (BE-3210, manufactured by RYOBI Limited) at a belt speed of 5.8 m/sec and a tension of 5 N to separate an acrylic pressure-sensitive adhesive (1) forming the pressure-sensitive adhesive layer.

A structure of the acrylic pressure-sensitive adhesive (1) was analyzed by NMR (AVANCE III-600 having a cryoprobe and manufactured by Bruker BioSpin Group) to reveal that the acrylic pressure-sensitive adhesive (1) had a $-COOC_4H_9$ group. The Tg of this base polymer was -40°C.

Potassium hydroxide was added at a concentration of 2 weight% to a mixed solution (the Hansen solubility parameter of the mixed solution = 17) containing methylcyclohexane and 1-butanol at 70/30 (volume ratio) to prepare a pressure-sensitive adhesive treatment solution (1).

An amount of 500 g of the pressure-sensitive adhesive treatment solution (1) was mixed with 50 g of the acrylic pressure-sensitive adhesive (1), and the mixture was stirred at 50°C for 10 hours. A precipitated solid was washed in ethyl acetate and dried at 130°C for one hour to give a hydrophilic polymer (1).

The Tg of the hydrophilic polymer (1) was 115°C.

A structure of the hydrophilic polymer (1) was analyzed by NMR (AVANCE III-600 having a cryoprobe and manufactured by Bruker BioSpin Group) to reveal that the hydrophilic polymer (1) had a $-COOC_4H_9$ group and a -COOK group.

An amount of 20 g of the hydrophilic polymer (1), 0.25 equivalents of sulfuric acid relative to the hydrophilic polymer (1), and 200 g of 1-butanol were mixed and stirred at 110°C for nine hours to give a supernatant containing a polymer component dissolved in 1-butanol and a neutralization product of a carboxylic acid salt.

The supernatant containing the polymer component dissolved in 1-butanol was collected and dropped into water to extract the polymer component. The polymer component was washed in water and tetrahydrofuran until the pH of the washing liquid became 5 or more. The resulting polymer component was dried at 130°C for one hour to give a recycled acrylic polymer (1).

The Tg of the recycled acrylic polymer (1) was -46°C.

A structure of the recycled acrylic polymer (1) was analyzed by NMR (AVANCE III-600 having a cryoprobe and manufactured by Bruker BioSpin Group) to reveal that the recycled acrylic polymer (1) had a $-COOC_4H_9$ group and a -COOH group.

The recycled acrylic polymer (1) was able to be directly used as a recycled acrylic pressure-sensitive adhesive.

[Example 2]

Potassium hydroxide was added at a concentration of 1.3 weight% to a mixed solution (the Hansen solubility parameter of the mixed solution = 20) containing cyclopentyl methyl ether and methanol at 70/30 (volume ratio) to prepare a pressure-sensitive adhesive treatment solution (2).

An amount of 500 g of the pressure-sensitive adhesive treatment solution (2) was mixed with 50 g of the acrylic pressure-sensitive adhesive (1) as separated in Example 1, and the mixture was stirred at 50°C for 10 hours. A precipitated solid was washed in ethyl acetate and dried at 130°C for one hour to give a hydrophilic polymer (2).

The Tg of the hydrophilic polymer (2) was 105°C.

A structure of the hydrophilic polymer (2) was analyzed by NMR (AVANCE III-600 having a cryoprobe and manufactured by Bruker BioSpin Group) to reveal that the hydrophilic polymer (2) had a $-COOC_4H_9$ group, a $-COOCH_3$ group, and a -COOK group.

An amount of 20 g of the hydrophilic polymer (2), 0.25 equivalents of sulfuric acid relative to the hydrophilic polymer (2), and 200 g of 1-butanol were mixed and stirred at 110°C for six hours to give a supernatant containing a polymer component dissolved in 1-butanol and a neutralization product of a carboxylic acid salt.

The supernatant containing the polymer component dissolved in 1-butanol was collected and dropped into water to extract the polymer component. The polymer component was washed in water and tetrahydrofuran until the pH of the washing liquid became 5 or more. The resulting polymer component was dried at 130°C for one hour to give a recycled acrylic polymer (2).

The Tg of the recycled acrylic polymer (2) was -22°C.

A structure of the recycled acrylic polymer (2) was analyzed by NMR (AVANCE III-600 having a cryoprobe and manufactured by Bruker BioSpin Group) to reveal that the recycled acrylic polymer (2) had a $-COOC_4H_9$ group, a $-COOCH_3$ group, and a -COOH group.

The recycled acrylic polymer (2) was able to be directly used as a recycled acrylic pressure-sensitive adhesive.

[Example 3]

An amount of 100 parts by weight of the recycled acrylic polymer (1) as obtained in Example 1 and 3 parts by weight of a TDI-based isocyanate crosslinking agent (manufactured by Tosoh Corporation under the product name "Coronate L") were blended to prepare an acrylic pressure-sensitive adhesive composition (1).

A 38 μm-thick polyethylene terephthalate film (manufactured by Mitsubishi Chemical Corporation under the product name "DIAFOIL") was used as a substrate. The acrylic pressure-sensitive adhesive composition (1) was applied to the substrate so that the acrylic pressure-sensitive adhesive composition (1) would have a thickness of 25 μm after dried. The acrylic pressure-sensitive adhesive composition (1) was dried at a drying temperature of 115°C for a drying time of two minutes. A recycled acrylic pressure-sensitive adhesive tape (1) was produced in this manner.

[Example 4]

An amount of 100 parts by weight of the recycled acrylic polymer (2) as obtained in Example 2 and 3 parts by weight of a TDI-based isocyanate crosslinking agent (manufactured by Tosoh Corporation under the product name "Coronate L") were blended to prepare an acrylic pressure-sensitive adhesive composition (2).

A 38 μm-thick polyethylene terephthalate film (manufactured by Mitsubishi Chemical Corporation under the product name "DIAFOIL") was used as a substrate.

The acrylic pressure-sensitive adhesive composition (2) was applied to the substrate so that the acrylic pressure-sensitive adhesive composition (2) would have a thickness of 25 μm after dried. The acrylic pressure-sensitive adhesive composition (2) was dried at a drying temperature of 115°C for a drying time of two minutes. A recycled acrylic pressure-sensitive adhesive tape (2) was produced in this manner.

[Evaluation]

The recycled acrylic pressure-sensitive adhesive tape (1) as obtained in Example 3, the recycled acrylic pressure-sensitive adhesive tape (2) as obtained in Example 4, and an acrylic pressure-sensitive adhesive tape (manufactured by Nitto Denko Corporation under the product name "No. 31B") as Reference Example 1 were each processed to have a width of 25 mm, applied to an adherend, and adhered thereto by moving a 2 kg hand roller back and forth once to give an evaluation sample.

Each of the evaluation samples was stored at room temperature (23°C) for 30 minutes, and then measured using a tensile tester. A tensile tester manufactured by Shimadzu Corporation under the product name "Autograph AGX-V" was used as the tensile tester. After the evaluation sample was set on the tensile tester, a tensile test was started. As for conditions of the tensile test, a peeling angle was 180 degrees and a peeling speed (tensile speed) was 300 mm/min. The load applied to peel the pressure-sensitive adhesive tape from each adherend was measured, and an average load was defined as a pressure-sensitive adhesive strength.

A SUS plate, a PC (polycarbonate) plate, a PS (polystyrene) plate, a PE (polyethylene) plate, and an acrylic plate were adopted as the adherends.

Table 1 shows the results.

[Table 1]

| | | | Example 3 | Example 4 | Reference Example 1 |
|---|---|---|---|---|---|
| | | | Recycled acrylic pressure-sensitive adhesive tape (1) | Recycled acrylic pressure-sensitive adhesive tape (2) | No. 31B |
| Total thickness | | (μm) | 63 | 63 | 65 |
| Substrate thickness | | (μm) | 38 | 38 | 38 |
| Pressure-sensitive adhesive layer | | (μm) | 25 | 25 | 27 |
| Pressure-sensitive adhesive strength | To SUS plate | (N/25 mm) | 10.08 | 12.28 | 10.79 |
| | To PC plate | (N/25 mm) | 11.02 | 12.56 | 11.78 |
| | To PS plate | (N/25 mm) | 9.36 | 0.89 | 8.21 |
| | To PE plate | (N/25 mm) | 6.44 | 0.21 | 4.91 |
| | To acrylic plate | (N/25 mm) | 8.99 | 0.55 | 7.85 |

INDUSTRIAL APPLICABILITY

The recycled acrylic pressure-sensitive adhesive producing method of the present invention can be effectively used for, for example, reclamation of a large amount of waste of pressure-sensitive adhesive tapes produced, for example, at sites where electrical parts or optical parts are manufactured.

**Claims**

**1.** A recycled acrylic pressure-sensitive adhesive production method comprising the steps of:

(I) reacting an acrylic pressure-sensitive adhesive, a liquid having a Hansen solubility parameter of 31 or less, and an alkaline compound to produce a hydrophilic polymer; and

(II) reacting the hydrophilic polymer and an alcohol (A2) to produce a recycled acrylic polymer.

**2.** The recycled acrylic pressure-sensitive adhesive production method according to claim 1, wherein the liquid having a Hansen solubility parameter of 31 or less includes at least one selected from the group consisting of an alcohol (A1), a hydrocarbon, a ketone, an ester, an ether, an amine, a nitrile, a carboxylic acid, and a terpene.

**3.** The recycled acrylic pressure-sensitive adhesive production method according to claim 2, wherein the liquid having a Hansen solubility parameter of 31 or less essentially includes the alcohol (A1).

**4.** The recycled acrylic pressure-sensitive adhesive production method according to claim 3, wherein the alcohol (A1) includes an alcohol having 1 to 8 carbon atoms.

**5.** The recycled acrylic pressure-sensitive adhesive production method according to claim 2, wherein the acrylic pressure-sensitive adhesive has a $-COO-R^1$ group, a structure of the alcohol (A1) is $R^{21}-OH$, and the $R^1$ and the $R^{21}$ are the same.

**6.** The recycled acrylic pressure-sensitive adhesive production method according to claim 2, wherein the acrylic pressure-sensitive adhesive has a $-COO-R^1$ group, a structure of the alcohol (A1) is $R^{21}-OH$, and the $R^1$ and the $R^{21}$ are different.

**7.** The recycled acrylic pressure-sensitive adhesive production method according to claim 1, wherein the acrylic pressure-sensitive adhesive has a $-COO-R^1$ group, a structure of the alcohol (A2) is $R^{22}-OH$, and the $R^1$ and the $R^{22}$ are the same.

**8.** The recycled acrylic pressure-sensitive adhesive production method according to claim 1, wherein the acrylic pressure-sensitive adhesive has a $-COO-R^1$ group, a structure of the alcohol (A2) is $R^{22}-OH$, and the $R^1$ and the $R^{22}$ are different.

**9.** The recycled acrylic pressure-sensitive adhesive production method according to claim 1, comprising the step of (III) separating the acrylic pressure-sensitive adhesive from an pressure-sensitive adhesive tape including the acrylic pressure-sensitive adhesive.

**10.** The recycled acrylic pressure-sensitive adhesive production method according to claim 1, comprising the step of (IV) reacting the recycled acrylic polymer and a crosslinking agent.

**11.** A recycled acrylic pressure-sensitive adhesive tape comprising:

a recycled acrylic pressure-sensitive adhesive obtained by the production method according to any one of claims 1 to 10; and
a substrate.

**INTERNATIONAL SEARCH REPORT**

International application No.
**PCT/JP2023/016765**

**A. CLASSIFICATION OF SUBJECT MATTER**

***C08J 3/24***(2006.01)i; ***C08J 11/08***(2006.01)i; ***C09J 133/00***(2006.01)i; ***C09J 7/38***(2018.01)i
FI: C09J133/00; C09J7/38; C08J3/24 CEY; C08J11/08

According to International Patent Classification (IPC) or to both national classification and IPC

**B. FIELDS SEARCHED**

Minimum documentation searched (classification system followed by classification symbols)

C08J3/24; C08J11/08; C09J133/00; C09J7/38

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2022/004609 A1 (NITTO DENKO CORP) 06 January 2022 (2022-01-06) claims 1-10, paragraphs [0207]-[0249] | 1-11 |
| A | JP 2001-328849 A (TOMOEGAWA PAPER CO LTD) 27 November 2001 (2001-11-27) claims 1-4, paragraphs [0014], [0033] | 1-11 |
| A | JP 2001-172579 A (OJI PAPER CO LTD) 26 June 2001 (2001-06-26) claims 1-6, paragraphs [0060]-[0126] | 1-11 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **16 June 2023** | **04 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/016765**

| Patent document cited in search report | Publication date (day/month/year) | Patent family member(s) | Publication date (day/month/year) |
|---|---|---|---|
| WO 2022/004609 A1 | 06 January 2022 | JP 2023-54113 A<br>claims 1-9 | |
| JP 2001-328849 A | 27 November 2001 | (Family: none) | |
| JP 2001-172579 A | 26 June 2001 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021175796 A
- JP 2002069411 A